# FASCICULE DE BREVET EUROPEEN

(11) **EP 3 674 215 B1**
(45) Date de publication et mention de la délivrance du brevet: **08.09.2021**
(21) Numéro de dépôt: 19218186.5
(22) Date de dépôt: 19.12.2019
(51) Int. Cl.: B64D 11/02, A47K 17/02, A47K 4/00, B60R 15/04

(54) **TOILETTE CONVERTIBLE POUR AERONEF**
KONVERTIERBARE TOILETTE FÜR LUFTFAHRZEUG
CONVERTIBLE TOILET FOR AIRCRAFT

(30) Priorité: 27.12.2018 FR 1874236
(43) Date de publication de la demande: 01.07.2020
(73) Titulaire: Airbus Operations SAS, 31060 Toulouse (FR)
(72) Inventeur: GUERING, Bernard, 31850 MONTRABE (FR); DELAHAYE, Romain, 31770 COLOMIERS (FR)
(74) Mandataire: Brevalex

(56) Documents cités:
- WO-A1-2015/151308
- DE-A1-102007 007 020
- DE-A1-102016 107 672
- JP-A- 2004 353 211
- US-A- 2 907 048
- US-A- 2 983 230
- US-A- 5 742 956
- US-A1- 2005 230 550
- US-A1- 2009 126 101

## Description

### DOMAINE TECHNIQUE

L'invention se rapporte au domaine des toilettes d'aéronef, et en particulier aux toilettes intégrées au sein de la pointe avant de l'aéronef.

L'invention s'applique préférentiellement aux avions commerciaux.

### ÉTAT DE LA TECHNIQUE ANTERIEURE

Au sein d'un aéronef, il est généralement prévu plusieurs toilettes, également dites cabines de toilette. Chaque toilette comporte habituellement au moins une cuvette de toilette, et un lavabo.

Ces toilettes occupent un espace qui réduit la superficie de la zone cabine dans laquelle se trouvent les passagers. Par conséquent, il existe un besoin d'optimisation de la conception des toilettes existantes, de manière à réduire leur emprise sur le plancher et augmenter d'autant la superficie de la zone cabine.

### EXPOSÉ DE L'INVENTION

Pour répondre au moins partiellement à ce besoin, l'invention a tout d'abord pour objet une toilette pour aéronef, comprenant une cuvette de toilette ainsi qu'un lavabo, le lavabo étant monté mobile au sein de la toilette de manière à pouvoir adopter au moins deux positions distinctes relativement à la cuvette de toilette, parmi lesquelles :
- une position de retrait adoptée pour amener la toilette dans une configuration d'utilisation de la cuvette ;
- une position déployée adoptée pour amener la toilette dans une configuration lavabo, position dans laquelle le lavabo est agencé au-dessus de la cuvette.

De plus, la toilette est conçue de sorte que le lavabo bascule vers le bas pour passer de sa position déployée à sa position de retrait.

Le caractère mobile du lavabo permet de rendre la toilette convertible entre la configuration d'utilisation de la cuvette de toilette, et la configuration lavabo. L'emprise au sol de la toilette s'en trouve avantageusement réduite, tout en offrant des fonctionnalités au moins identiques à celle existantes. La zone cabine dans laquelle se trouvent les passagers s'avère ainsi étendue, entraînant une plus grande rentabilité pour l'aéronef. De plus, la conception à basculement vers le bas du lavabo, pour passer de sa position déployée à sa position de retrait, participe grandement au gain d'encombrement du lavabo lorsqu'il adopte sa position de retrait. En effet, au niveau habituel d'implantation d'une toilette dans un aéronef, à savoir davantage en partie supérieure du fuselage qu'en partie inférieure, la courbure observée sur le fuselage ménage plus de place proche du plancher de toilette, que du plafond. Ainsi, en position de retrait, le lavabo basculé vers le bas se trouve plus proche du plancher de toilette, où la largeur de la toilette est habituellement plus importante qu'au plafond.

Avec un tel basculement proposé par l'invention, le lavabo en position de retrait se trouve ainsi avantageusement logé dans une zone plus étendue transversalement, conférant ainsi une optimisation de l'encombrement.

L'invention prévoit de préférence au moins l'une des caractéristiques techniques optionnelles suivantes, prises isolément ou en combinaison.

Le lavabo fait partie intégrante d'un module de lavabo également équipé d'une table de lavabo, le module de lavabo étant monté mobile de manière à pouvoir adopter lesdites au moins deux positions distinctes relativement à la cuvette de toilette, également en basculant vers le bas pour passer de la position déployée à la position de retrait.

La toilette comprend un rideau enrouleur présentant une cassette fixe agencée à l'arrière de la cuvette de toilette, et une extrémité de rideau solidaire d'une partie avant de la table de lavabo.

Le module de lavabo est équipé d'un opercule de lavabo monté mobile relativement à la table de lavabo de manière à pouvoir adopter deux positions distinctes, parmi lesquelles :
- une position d'obturation du lavabo permettant de former, conjointement avec la table de lavabo, une table à langer ;
- une position de retrait donnant accès au lavabo. Le module de lavabo est également équipé d'un robinet, de préférence monté mobile de manière à pouvoir adopter deux positions distinctes relativement au lavabo, parmi lesquelles :
- une position de retrait rendant le robinet inaccessible ;
- une position d'utilisation du robinet. Le module de lavabo est monté mobile sur une tablette qui forme, lorsque le module adopte sa position déployée, une extension de la table de lavabo.

La tablette est montée sur une paroi arrière de la toilette, de manière fixe ou mobile en hauteur.

Le module de lavabo est monté mobile en rotation, de préférence selon un axe de rotation parallèle à une direction transversale de la cuvette de toilette.

Dans la position de retrait du module de lavabo, la table de lavabo se situe derrière la cuvette de toilette, de préférence en étant agencée verticalement.

La toilette comprend un couvercle recouvrant la cuvette de toilette, le couvercle présentant de préférence une forme générale rectangulaire dont la longueur est orientée transversalement par rapport à la cuvette de toilette.

La toilette comporte un plancher comprenant un repose-pied réglable en hauteur.

La toilette est configurée de sorte que le repose-pied soit réglable en hauteur par l'utilisateur, et/ou de manière automatique en fonction de l'angle formé au niveau des genoux de l'utilisateur assis sur la cuvette de toilette.

La toilette est équipée d'un système d'entraînement permettant de déplacer le lavabo dans chacune des positions distinctes.

L'invention a également pour objet une pointe avant d'aéronef comprenant au moins une toilette comme décrite ci-dessus, la toilette comprenant une paroi arrière dont la forme suit préférentiellement le profil de la portion de fuselage à double courbure recouverte par cette paroi arrière de toilette.

Enfin, l'invention porte sur un aéronef comprenant une telle pointe avant, et/ou au moins une toilette telle que décrite précédemment.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique de côté d'un aéronef selon l'invention ;
[Fig. 2] représente une vue schématique de côté d'une partie de l'aéronef montré sur la figure précédente, en particulier sa pointe avant ;
[Fig. 3] représente une vue de côté plus détaillée de la pointe avant montrée sur les figures précédentes ;
[Fig. 4] représente une vue de dessus plus détaillée de la pointe avant montrée sur les figures précédentes :
[Fig. 5] représente une vue en perspective de l'une des toilettes montrée sur les figures précédentes, en configuration d'utilisation de la cuvette de toilette ;
[Fig. 6] représente une vue de côté de la toilette montrée sur la figure précédente ;
[Fig. 7] représente une vue de dessus de la toilette montrée sur les figures 5 et 6 ;
[Fig. 8] est une vue en perspective similaire à celle de la figure 5, avec le couvercle de cuvette montré en position relevée d'utilisation de la cuvette ;
[Fig. 9] est une vue de côté de la toilette montrée sur la figure 8, avec un premier utilisateur assis sur la cuvette de toilette ;
[Fig. 10] est une vue de côté similaire à la précédente, avec un second utilisateur de plus petite taille assis sur la cuvette de toilette ;
[Fig. 11] représente une vue de côté de la toilette montrée sur les figures précédentes, en configuration d'utilisation de la cuvette de toilette ;
[Fig. 12] représente une vue de côté similaire à la précédente, avec la toilette en configuration lavabo ;
[Fig. 13] représente une vue en perspective de la toilette en configuration lavabo, avec l'opercule de lavabo en position d'obturation du lavabo ;
[Fig. 14] représente une vue en perspective similaire à la précédente, avec l'opercule de lavabo en position d'obturation donnant accès au lavabo ;
[Fig. 15] représente une vue de côté similaire à celle de la figure 12, montrant le robinet de lavabo dans deux positions distinctes ; et
[Fig. 16] représente une vue de côté similaire à la précédente, avec le module de lavabo déplacé dans une position plus haute que sur la figure précédente.

### DESCRIPTION DETAILLEE

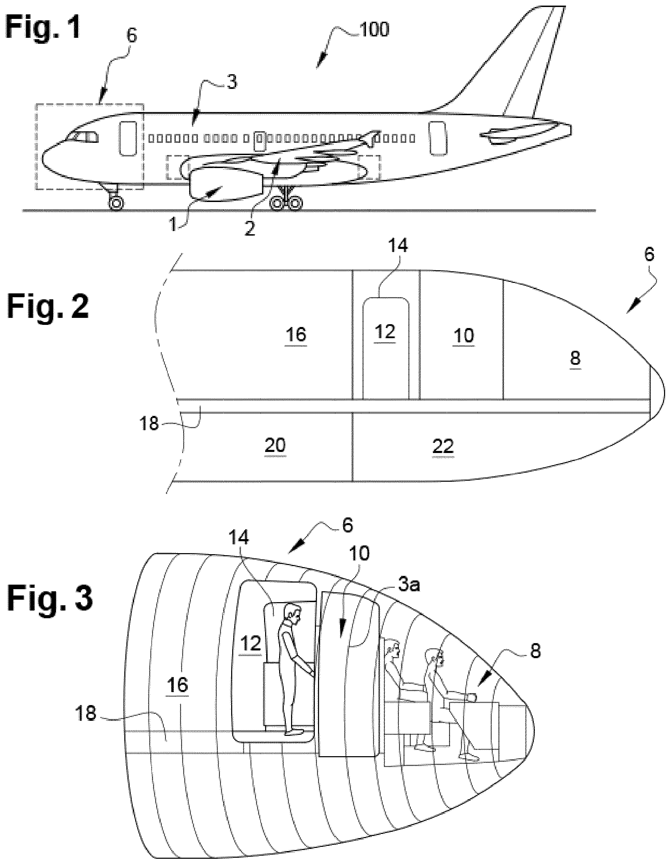

En référence à la figure 1, il est représenté un aéronef 100 du type avion commercial, comprenant deux ailes 2 (une seule visible sur la figure 1) fixées à un fuselage 3 et portant chacune une turbomachine 1 du type à double flux, tel qu'un turboréacteur. Sur cet aéronef 100, il est prévu une pointe avant 6 qui est spécifique à la présente invention, et dont un mode de réalisation préféré sera décrit ultérieurement.

La figure 2 montre la pointe avant 6, dont la partie supérieure avant forme le cockpit 8. A l'arrière du cockpit, il est prévu au moins une toilette ou cabine de toilette 10, spécifique à l'invention. Ce sont par exemple deux toilettes 10 qui sont agencées respectivement au niveau des deux côtés opposés de l'aéronef. A l'arrière des toilettes 10, il est prévu un passage 12 délimité en partie par une porte d'accès avant 14 montée sur le fuselage. Ce passage 12 débouche vers l'arrière dans une cabine passagers 16 dans laquelle se trouvent les sièges passagers (non-représentés), cette cabine étant également dénommée « zone cabine ». La cabine passagers 16 est délimitée vers le bas par un plancher de cabine 18, en dessous de laquelle se trouve une zone cargo 20. Enfin, à l'avant de la zone cargo 20 et toujours sous le plancher 18, la pointe avant 6 comprend une zone technique inférieure 22 qui s'étend jusque sous le cockpit 8.

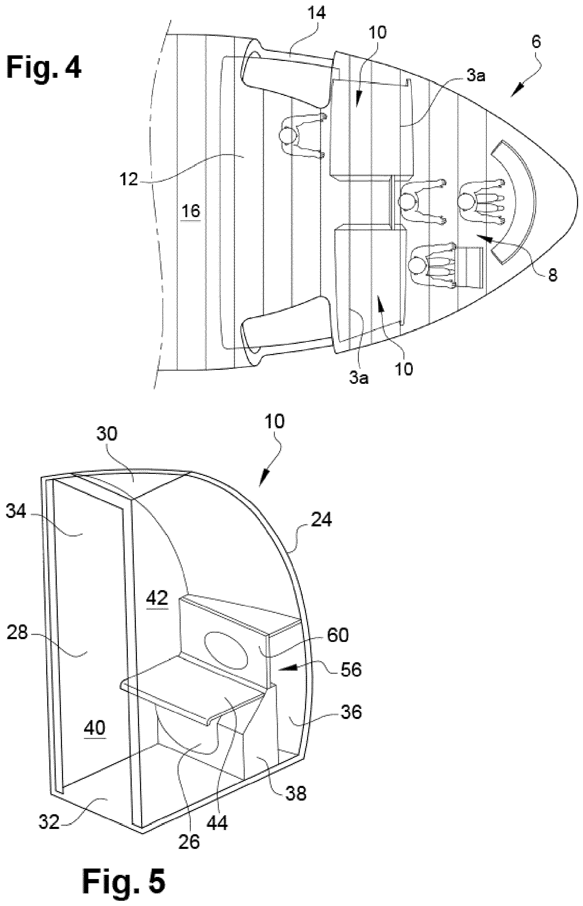

Les figures 3 et 4 représentent de manière plus détaillée la pointe avant 6, selon des angles de vue différents. Ces deux figures montrent que chaque toilette 10 se trouve au niveau d'une portion de fuselage 3a à double courbure, c'est-à-dire qui se rétrécit à la fois dans la direction de la hauteur et dans la direction transversale de l'aéronef, en allant vers l'avant dans la direction longitudinale de cet aéronef.

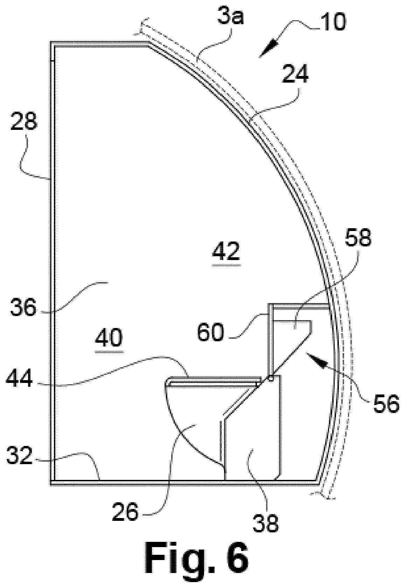

La toilette 10 représentée sur les figures 5 à 7 montre qu'elle comprend plusieurs parois qui la délimitent, comme une paroi arrière 24. A cet égard, il est indiqué que dans la suite de la description de la toilette 10, les termes « avant », « arrière » et « latéral » sont utilisés en rapport avec l'orientation d'une cuvette de toilette 26. Ainsi, la paroi arrière 24 de la toilette correspondant à la paroi qui recouvre la portion de fuselage 3a précitée, correspondant à une partie latérale de ce fuselage. La forme de cette paroi arrière 24 suit le profil de la portion de fuselage 3a qu'elle recouvre, et sur laquelle elle est fixée. Par conséquent, la paroi arrière 24 présente une forme à double courbure semblable à celle de la portion de fuselage 3a.

La paroi arrière 24 de la toilette fait face à une paroi avant 28, essentiellement formée par une porte d'accès, qui est préférentiellement recouverte intérieurement d'un miroir. La paroi avant 28 est préférentiellement plane.

La délimitation de la toilette 10 s'effectue également par une paroi supérieure 30, un plancher 32 se trouvant dans la continuité du plancher de la cabine passager, une première paroi latérale 34 séparant la toilette du cockpit, et une seconde paroi latérale 36 séparant la toilette de la cabine passagers.

A l'intérieur de la toilette 10, il est prévu la cuvette de toilette 26 dont l'avant est donc orienté vers la paroi avant 28, et dont l'arrière est orienté vers la paroi arrière 24. La cuvette 26 est portée vers l'avant par un socle 38 fixé sur le plancher 32. Ce socle 38 peut intégrer un système d'arrivée et d'évacuation d'eau. La cuvette 26 et son socle 38 se trouvent plus proches de la paroi arrière 24 que de la paroi avant 28, laissant ainsi apparaitre un espace intérieur avant de toilette 40 dans lequel un utilisateur peut se tenir debout, face à la cuvette de toilette 26. Cet espace intérieur avant 40 correspond à l'endroit de la toilette qui présente la plus grande hauteur, du fait de la double courbure observée sur la paroi arrière 24 qui réduit la hauteur d'un espace arrière 42 logeant la cuvette 26.

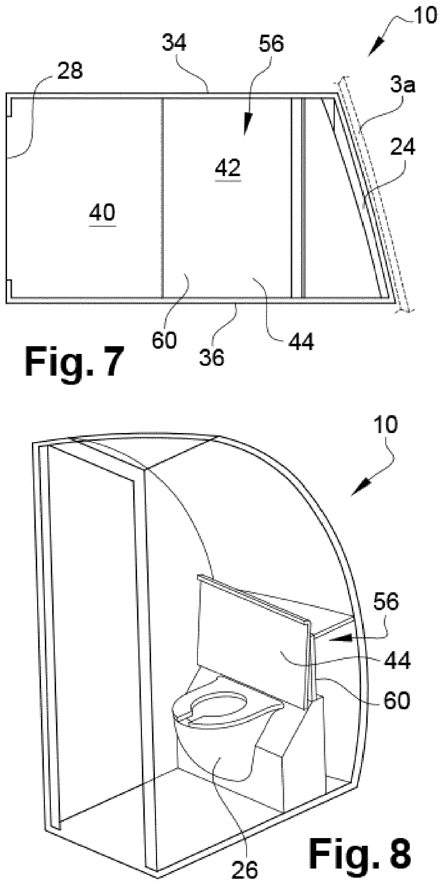

La cuvette de toilette 26 est équipée d'un abattant de toilette et d'un couvercle 44. Ce couvercle 44 présente une forme générale rectangulaire dont la longueur est orientée transversalement par rapport à la cuvette. En d'autres termes, la longueur du couvercle 44 s'étend dans la direction d'écartement des deux parois latérales 34, 36 de la toilette, selon une dimension qui est préférentiellement sensiblement identique à l'écartement entre ces deux parois 34, 36. Cette dernière caractéristique est le mieux visible sur la figure 7.

Le couvercle 44 peut présenter une extrémité avant recourbée vers le bas. Son extrémité arrière est quant à elle articulée sur la cuvette 26 ou sur son socle 38, de manière à ce que le couvercle 44 puisse être basculé d'une position rabattue montrée sur les figures 5 à 7, à une position relevée d'utilisation montrée sur la figure 8, et inversement.

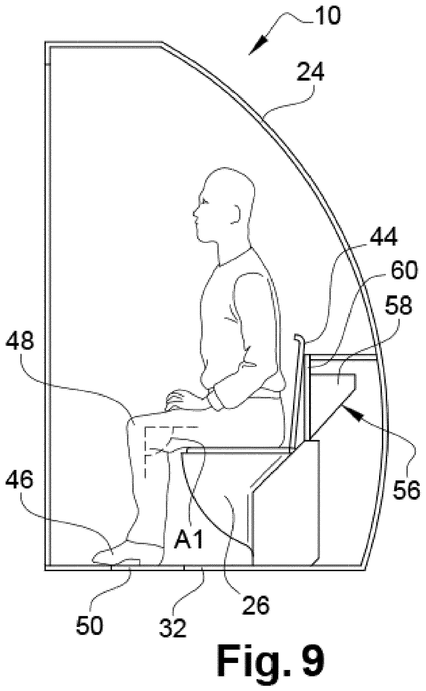

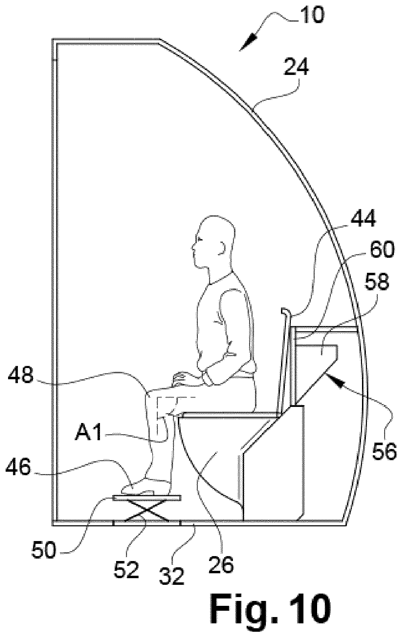

La position relevée du couvercle 44 est également montrée sur les figures 9 et 10, montrant respectivement deux personnes de tailles différentes assises sur la cuvette 26. Dans la position relevée, le couvercle 44 recouvre entièrement le lavabo 56 situé derrière lui en position de retrait. Cela permet de bénéficier d'une hygiène renforcée, grâce à la protection du lavabo 56 par le couvercle 44.

Sur la figure 9, l'utilisateur assis sur la cuvette 26 présente une taille élevée, qui lui permet d'avoir ses pieds 46 en appui sur le plancher 32 de la toilette, tout en présentant un angle satisfaisant au niveau de ses genoux 48. Cet angle est ici d'environ 90°, et il considéré comme satisfaisant physiologiquement dès lors qu'il est compris dans un intervalle allant par exemple de 60 à 100 °.

Dans le cas d'un utilisateur de plus petite taille, il se peut que ses pieds 46 ne touchent pas le plancher 32 lorsqu'il est assis sur la cuvette 26, et qu'il souhaite conserver un angle acceptable au niveau de ses genoux 48. Cette situation est visible sur la figure 10, montrant une fonctionnalité de l'invention par laquelle un repose-pied 50 s'adapte à la taille de l'utilisateur.

Plus précisément, le repose-pied 50 est intégré au plancher 32, et se trouve dans un même plan que ce dernier lorsqu'il adopte une position de retrait telle que montrée sur la figure 9. Le repose-pied 50 demeure néanmoins réglable en hauteur par rapport au reste du plancher 32, grâce à un système de mise en mouvement 52 le reliant au plancher. Ce système de mise en mouvement 52 permet ainsi de régler la hauteur du repose-pied 50, par exemple en étant commandé par l'utilisateur dans le but de l'amener à l'altitude souhaitée, procurant un appui des pieds 46 plaçant les genoux dans un angle A1 acceptable. De manière alternative, la toilette 10 peut être équipée d'un dispositif de capteur (non représenté) permettant de détecter une ou plusieurs valeurs représentatives de l'angle A1, au niveau des genoux 48 de l'utilisateur assis sur la cuvette 26. En fonction de l'angle A1 ainsi détecté, le repose-pied 50 peut être déplacé automatiquement via le système 52, jusqu'à ce que l'angle A1 adopte une valeur acceptable, prédéterminée et préenregistrée dans un système automatisé de contrôle (non représenté).

Sur les figures qui viennent d'être décrites, il est également représenté un module de lavabo 56 intégré à la toilette 10, situé en arrière de la cuvette de toilette 26, dans l'espace arrière 42. Le module de lavabo ne se situe donc plus latéralement par rapport à la cuvette 26 comme dans l'art antérieur, mais derrière celle-ci. Sur toutes les figures précédentes, le module de lavabo 56 adopte une position de retrait plaçant la toilette 10 dans une configuration d'utilisation de la cuvette. En d'autres termes, dans cette configuration d'utilisation de la cuvette, le module de lavabo 56 en retrait vers l'arrière n'est pas utilisable. D'ailleurs, lorsque le couvercle de toilette 44 adopte sa position relevée telle que montrée sur les figures 8 à 10, il recouvre entièrement le module de lavabo 56. Cela confère avantageusement une hygiène renforcée.

Le module de lavabo 56 comporte un lavabo 58, également dénommé vasque, ainsi qu'une table de lavabo 60 disposée autour du lavabo 58. La table 60 présente une forme générale rectangulaire dont la longueur est orientée transversalement par rapport à la cuvette. En d'autres termes, la longueur de la table de lavabo 60 s'étend dans la direction d'écartement des deux parois latérales 34, 36 de la toilette, selon une dimension qui est préférentiellement sensiblement identique à l'écartement entre ces deux parois 34, 36. Cette dernière caractéristique est le mieux visible sur la figure 7.

Comme cela sera décrit ultérieurement, le module de lavabo 56 peut également comporter un opercule mobile de lavabo ainsi qu'un robinet, même si ce dernier pourrait alternativement être agencé ailleurs dans la toilette, tout en restant à proximité du lavabo.

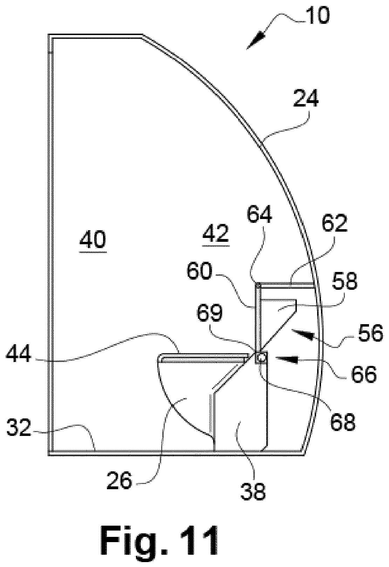

Dans la position de retrait du module de lavabo 56, également représentée sur la figure 11, la table de lavabo 60 se situe en arrière par rapport à la cuvette de toilette 26. Cette table 60 est alors orientée de préférence verticalement, de manière à présenter l'encombrement le plus faible possible. Au niveau d'une extrémité haute de la table 60, celle-ci est montée mobile en rotation sur une tablette 62 horizontale, elle-même montée sur la paroi arrière 24. L'axe de rotation 64 du module 56 par rapport à la tablette 64 est parallèle à la direction transversale de la cuvette de toilette 26. Cet axe de rotation 64 s'avère ainsi parallèle à l'axe de rotation du couvercle de toilette 44, et il est destiné à être parallèle à un axe longitudinal de l'aéronef intégrant cette toilette. Il est noté que l'axe de rotation 64, qui permet au module 56 de basculer vers le bas dans sa position de retrait, peut être prévu entre ce module 56 et la tablette 62, ou directement entre ce module 56 et la paroi arrière 24 de la toilette, de forme courbe correspondant à celle de la portion de fuselage adjacente. Comme cela est visible sur la figure 11, le module 58 en position de retrait est tel qu'il s'étend en hauteur vers le haut et vers le bas par rapport à un point de la paroi arrière courbe 24 définissant la largeur maximale de la toilette 10 entre les parois avant et arrière 28, 24 de celle-ci. Par conséquent, en position de retrait, le module 58 est avantageusement placé dans la partie de la toilette présentant la plus grande largeur, conférant ainsi davantage d'espace à l'occupant.

Dans la position de retrait du module 56, le lavabo 58 se trouve logé entre la table de lavabo 60 et la paroi arrière 24 de la toilette. Cette position de la figure 11 correspond de préférence à celle adoptée par défaut, dans laquelle l'utilisateur trouve la toilette 10 au moment où il pénètre à l'intérieur. Il peut ainsi soit relever le couvercle 44, soit s'asseoir dessus pour se préparer.

Toujours sur cette figure 11, il est montré la présence d'un rideau enrouleur 66, qui comporte une cassette fixe 68 agencée à l'arrière de la cuvette 26, par exemple au sein d'une partie supérieure du socle 38. La cassette 68 intègre le rideau dont une extrémité est solidaire d'une partie avant de la table de lavabo 60. Par exemple, cette extrémité de rideau est fixée sur le chant avant 69 de la table 60, ce chant étant agencé vers le bas dans la position de retrait de la figure 11. Dans cette position, le rideau n'est presque pas déroulé, et reste voire même intégralement enroulé dans la cassette 68, puisque le chant avant 69 se trouve sensiblement contigu à l'extrémité supérieure du socle 38.

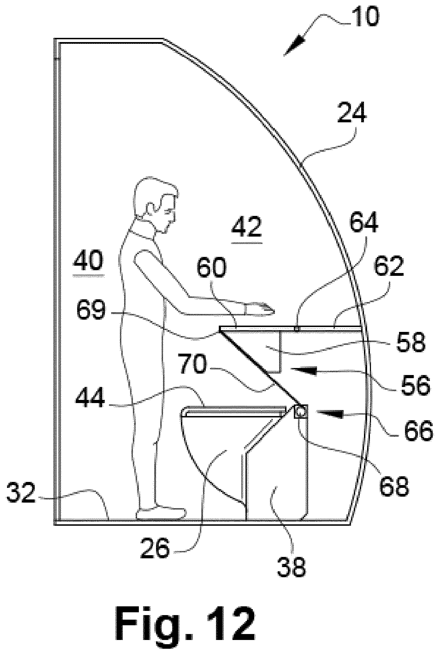

En référence à présent à la figure 12, il est montré que le module de lavabo 56 peut être déplacé de sa position de retrait à une position déployée, afin de placer la toilette 10 dans une configuration dite « lavabo ». La position déployée du module 56 est obtenue en le faisant pivoter d'un angle d'environ 90° selon l'axe 64, de manière à amener la table de lavabo 60 dans une orientation sensiblement horizontale. De ce fait, la table de lavabo 60 se situe dans la continuité de la tablette 62 qui la supporte, de sorte que cette dernière forme une extension de la table de lavabo 60.

Le lavabo 58 se trouve quant à lui agencé au moins en partie au-dessus de la cuvette 26, dans l'espace arrière 42. De préférence, c'est la totalité du lavabo 58 qui se trouve au-dessus de la cuvette 26, rendant par ailleurs celle-ci inutilisable.

Lors du déplacement du module de lavabo 56 de la position de retrait à la position déployée, le rideau 70 s'extrait progressivement de la cassette 68, en étant tiré par son extrémité solidaire du chant avant 69 de la table 60. Le rideau 70 recouvre ainsi le lavabo 58 situé plus en arrière dans la toilette.

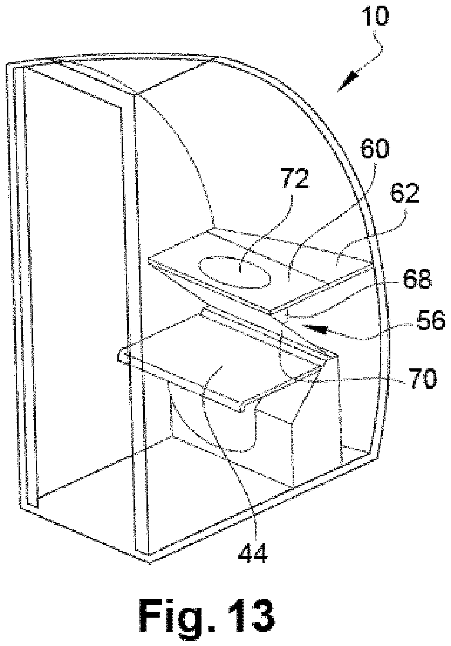

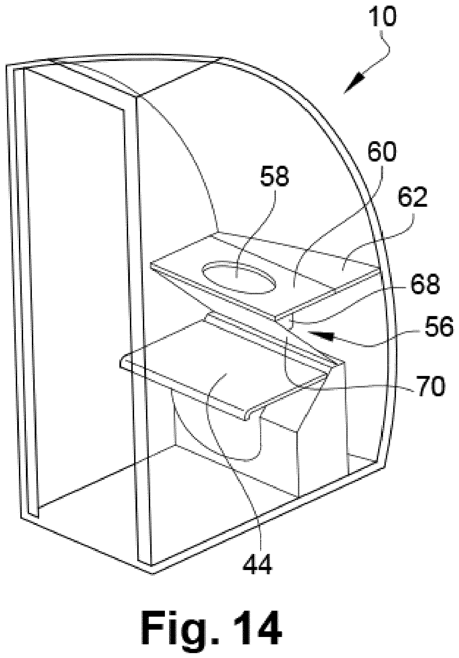

Le lavabo 58 peut rester ouvert en permanence, mais s'expose alors à des problèmes hygiéniques dans la position de retrait, en raison de sa proximité avec la cuvette 26. Par conséquent, le lavabo 58 est préférentiellement équipé d'un opercule 72 montré sur la figure 13. Cet opercule 72 est monté mobile relativement à la table 60, de manière à pouvoir être déplacé d'une position d'obturation de lavabo telle que montrée sur la figure 13, à une position de retrait donnant accès à ce lavabo, telle que montrée sur la figure 14.

Dans la position d'obturation de la figure 13, l'opercule 72 ferme le lavabo 58, ce qui lui permet de former une table à langer conjointement avec la table 60 et la tablette 62. Ces trois éléments 72, 60, 62 se trouvent en effet sensiblement dans un même plan horizontal, leur permettant de former cette table à langer ou toute autre surface de travail.

Lors de l'ouverture de l'opercule 72, celui-ci s'escamote par exemple dans l'épaisseur de la table de lavabo 60. Cet opercule 72 peut être réalisé en une ou plusieurs parties distinctes.

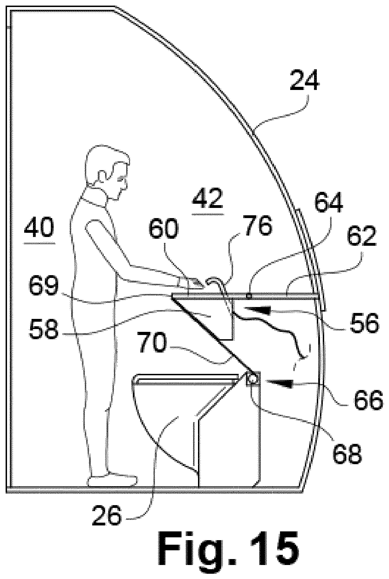

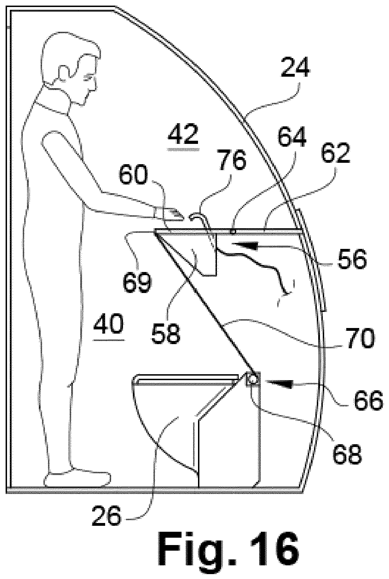

Une fois l'opercule ouvert, le lavabo 58 peut être utilisé. Il est associé à un robinet qui peut se trouver sur la tablette 62, ou bien être intégré au module de lavabo 56, comme cela a été représenté sur les figures 15 et 16. Quelle que soit la réalisation envisagée, le robinet peut être fixé de manière immobile sur l'élément qui le supporte, ou bien de manière mobile.

Par exemple, dans le cas d'un montage du robinet 76 sur le lavabo 58, le robinet peut adopter une position de retrait schématisée en pointillés sur la figure 15. Dans cette position, le robinet 76 est inaccessible, et il ne dépasse pas l'ouverture supérieure du lavabo 58, en particulier de manière à pouvoir fermer l'opercule du lavabo.

Le robinet 76 peut également adopter une position d'utilisation, dans laquelle il fait saillie vers le haut au-dessus de l'ouverture supérieure du lavabo 58. Cette position d'utilisation est montrée en trait plein sur la figure 15.

Néanmoins, comme évoqué précédemment, le robinet 76 peut être monté mobile ou fixe à tout autre endroit de la toilette, de façon à permettre l'arrivée d'eau dans le lavabo 58 adoptant sa position déployée.

Enfin, il est noté que la tablette 62 portant le module de lavabo 56 peut être montée fixe sur la paroi arrière 24, ou mobile en hauteur par rapport à celle-ci. Dans ce dernier cas illustré sur les figures 15 et 16, la tablette 62 est montée mobile sur un rail 80 longeant la paroi arrière 24 dans le sens de la hauteur. En d'autres termes, le rail 80 présente une simple courbure, et s'inscrit dans un plan transversal de l'aéronef. Le déplacement de cet ensemble peut être aussi réalisé en remplacement du rail courbe 80 par deux rails rectilignes disposés légèrement inclinés sur les proies latérales 34 et 36 de la toilette 10.

La tablette 62 et le module de lavabo 56 peuvent ainsi être déplacés vers le haut ou vers le bas au sein de l'espace arrière 42 de la toilette, pour s'adapter à la taille de l'utilisateur se tenant debout dans l'espace intérieur avant 40. Par exemple, sur la figure 16, l'ensemble 56, 62 est relevé par rapport à sa position de la figure 15, de manière à s'adapter à un utilisateur de plus grande taille.

Ce déplacement de la tablette 62, tout comme les déplacements de tous les autres composants mobiles décrits précédemment, peuvent être opérés manuellement par l'utilisateur. Alternativement, un ou plusieurs systèmes de mise en mouvement (non représentés) sont prévus pour réaliser ces déplacements de module de lavabo 56, de l'opercule 72, du robinet 76, ou encore de la tablette 62. Ces systèmes de mise en mouvement sont réalisés à l'aide de moyens conventionnels, comme des moteurs. Leur commande peut être gérée par l'utilisateur, ou bien de manière automatisée, par détection des besoins de l'utilisateur. Dans ce dernier cas, la toilette peut être équipée d'un système automatisé de contrôle de l'ensemble des systèmes de mise en mouvement.

Bien entendu, diverses modifications peuvent être apportées par l'homme du métier à l'invention qui vient d'être décrite, uniquement à titre d'exemples non limitatifs, et dont la portée est définie par les revendications jointes en annexe.

## Revendications

1. Toilette (10) pour aéronef, comprenant une cuvette de toilette (26) ainsi qu'un lavabo (58), **caractérisée en ce que** le lavabo (58) est monté mobile au sein de la toilette de manière à pouvoir adopter au moins deux positions distinctes relativement à la cuvette de toilette (26), parmi lesquelles :
- une position de retrait adoptée pour amener la toilette (10) dans une configuration d'utilisation de la cuvette (26) ;
- une position déployée adoptée pour amener la toilette (10) dans une configuration lavabo, position dans laquelle le lavabo (58) est agencé au-dessus de la cuvette (26),
et **en ce que** la toilette est conçue de sorte que le lavabo (58) bascule vers le bas pour passer de sa position déployée à sa position de retrait.

2. Toilette selon la revendication 1, **caractérisée en ce que** le lavabo (58) fait partie intégrante d'un module de lavabo (56) également équipé d'une table de lavabo (60), le module de lavabo (56) étant monté mobile de manière à pouvoir adopter lesdites au moins deux positions distinctes relativement à la cuvette de toilette (26), également en basculant vers le bas pour passer de la position déployée à la position de retrait.

3. Toilette selon la revendication 2, **caractérisée en ce qu'**elle comprend un rideau enrouleur (66) présentant une cassette fixe (68) agencée à l'arrière de la cuvette de toilette (26), et une extrémité de rideau solidaire d'une partie avant (69) de la table de lavabo (60).

4. Toilette selon la revendication 2 ou la revendication 3, **caractérisée en ce que** le module de lavabo (56) est équipé d'un opercule de lavabo (72) monté mobile relativement à la table de lavabo (60) de manière à pouvoir adopter deux positions distinctes, parmi lesquelles :
- une position d'obturation du lavabo (58) permettant de former, conjointement avec la table de lavabo (60), une table à langer ;
- une position de retrait donnant accès au lavabo (58).

5. Toilette selon l'une quelconque des revendications 2 à 4, **caractérisée en ce que** le module de lavabo (56) est également équipé d'un robinet (76), de préférence monté mobile de manière à pouvoir adopter deux positions distinctes relativement au lavabo (58), parmi lesquelles :
- une position de retrait rendant le robinet (76) inaccessible ;
- une position d'utilisation du robinet (76).

6. Toilette selon l'une quelconque des revendications 2 à 5, **caractérisée en ce que** le module de lavabo (56) est monté mobile sur une tablette (62) qui forme, lorsque le module (56) adopte sa position déployée, une extension de la table de lavabo (60).

7. Toilette selon la revendication précédente, **caractérisée en ce que** la tablette (62) est montée sur une paroi arrière (26) de la toilette, de manière fixe ou mobile en hauteur.

8. Toilette selon l'une quelconque des revendications 2 à 7, **caractérisée en ce que** le module de lavabo (56) est monté mobile en rotation, de préférence selon un axe de rotation (64) parallèle à une direction transversale de la cuvette de toilette (26).

9. Toilette selon l'une quelconque des revendications 2 à 8, **caractérisée en ce que** dans la position de retrait du module de lavabo (56), la table de lavabo (60) se situe derrière la cuvette de toilette (26), de préférence en étant agencée verticalement.

10. Toilette selon l'une quelconque des revendications précédentes, **caractérisée en ce qu'**elle comprend un couvercle (44) recouvrant la cuvette de toilette (26), le couvercle (44) présentant de préférence une forme générale rectangulaire dont la longueur est orientée transversalement par rapport à la cuvette de toilette (26).

11. Toilette selon l'une quelconque des revendications précédentes, **caractérisé en ce qu'**elle comporte un plancher (32) comprenant un repose-pied (50) réglable en hauteur.

12. Toilette selon la revendication précédente, **caractérisée en ce qu'**elle est configurée de sorte que le repose-pied (50) soit réglable en hauteur par l'utilisateur, et/ou de manière automatique en fonction de l'angle (A1) formé au niveau des genoux (48) de l'utilisateur assis sur la cuvette de toilette (26).

13. Toilette selon l'une quelconque des revendications précédentes, **caractérisé en ce qu'**elle est équipée d'un système d'entraînement permettant de déplacer le lavabo (58) dans chacune des positions distinctes.

14. Pointe avant (6) d'aéronef comprenant au moins une toilette (10) selon l'une quelconque des revendications précédentes, la toilette comprenant une paroi arrière (24) dont la forme suit préférentiellement le profil de la portion de fuselage (3a) à double courbure recouverte par cette paroi arrière de toilette.

15. Aéronef (100) comprenant une pointe avant (6) selon la revendication précédente, et/ou au moins une toilette (10) selon l'une quelconque des revendications 1 à 13.

## Patentansprüche

1. Toilette (10) für ein Luftfahrzeug, umfassend eine Toilettenschüssel (26) und ein Waschbecken (58), **dadurch gekennzeichnet, dass** das Waschbecken (58) beweglich innerhalb der Toilette montiert ist, so dass es zumindest zwei verschiedene Positionen relativ zur Toilettenschüssel (26) einnehmen kann, darunter:
- eine eingefahrene Position, die dazu ausgelegt ist, die Toilette (10) in eine Konfiguration zur Benutzung der Toilettenschüssel (26) zu bringen;
- eine ausgefahrene Position, die dazu ausgelegt ist, die Toilette (10) in eine Waschbeckenkonfiguration zu bringen, in der das Waschbecken (58) oberhalb der Toilettenschüssel (26) angeordnet ist,
und dass die Toilette so gestaltet ist, dass das Waschbecken (58) nach unten kippt, um von seiner ausgefahrenen Position in seine eingefahrene Position zu wechseln.

2. Toilette nach Anspruch 1, **dadurch gekennzeichnet, dass** das Waschbecken (58) integraler Bestandteil eines Waschbeckenmoduls (56) ist, das außerdem mit einem Waschtisch (60) ausgestattet ist, wobei das Waschbeckenmodul (56) beweglich montiert ist, um die zumindest zwei verschiedenen Positionen relativ zur Toilettenschüssel (26) einnehmen zu können, wobei es ebenfalls nach unten kippt, um von der ausgefahrenen Position in die eingefahrene Position zu wechseln.

3. Toilette nach Anspruch 2, **dadurch gekennzeichnet, dass** sie einen einrollbaren Vorhang (66) umfasst, der eine an der Rückseite der Toilettenschüssel (26) angeordnete feste Kassette (68) und ein fest mit einem vorderen Teil (69) des Waschtischs (60) verbundenes Vorhangende aufweist.

4. Toilette nach Anspruch 2 oder Anspruch 3, **dadurch gekennzeichnet, dass** das Waschbeckenmodul (56) mit einer Waschbeckenabdeckung (72) ausgestattet ist, die relativ zum Waschtisch (60) beweglich montiert ist, um zwei verschiedene Positionen einnehmen zu können, darunter:
- eine Position, in der das Waschbecken (58) geschlossen ist, um zusammen mit dem Waschtisch (60) einen Wickeltisch auszubilden;
- eine eingefahrene Position, die den Zugang zum Waschbecken (58) ermöglicht.

5. Toilette nach einem der Ansprüche 2 bis 4, **dadurch gekennzeichnet, dass** das Waschbeckenmodul (56) außerdem mit einem Wasserhahn (76) ausgestattet ist, der vorzugsweise beweglich montiert ist, um zwei verschiedene Positionen relativ zum Waschbecken (58) einnehmen zu können, darunter:
- eine eingefahrene Position, die den Wasserhahn (76) unzugänglich macht;
- eine Gebrauchsposition des Wasserhahns (76).

6. Toilette nach einem der Ansprüche 2 bis 5, **dadurch gekennzeichnet, dass** das Waschbeckenmodul (56) beweglich an einer Platte (62) montiert ist, die, wenn das Modul (56) seine ausgefahrene Position einnimmt, eine Erweiterung des Waschtischs (60) ausbildet.

7. Toilette nach dem vorangehenden Anspruch, **dadurch gekennzeichnet, dass** die Platte (62) fest oder höhenverstellbar an einer Rückwand (26) der Toilette montiert ist.

8. Toilette nach einem der Ansprüche 2 bis 7, **dadurch gekennzeichnet, dass** das Waschbeckenmodul (56) drehbar montiert ist, vorzugsweise entlang einer Drehachse (64), die parallel zu einer Querrichtung der Toilettenschüssel (26) verläuft.

9. Toilette nach einem der Ansprüche 2 bis 8, **dadurch gekennzeichnet, dass** sich der Waschtisch (60) in der eingefahrenen Position des Waschbeckenmoduls (56) hinter der Toilettenschüssel (26) befindet, wobei er vorzugsweise vertikal angeordnet ist.

10. Toilette nach einem der vorangehenden Ansprüche, **dadurch gekennzeichnet, dass** sie einen Deckel (44) umfasst, der die Toilettenschüssel (26) bedeckt, wobei der Deckel (44) vorzugsweise eine allgemeine Rechteckform aufweist, dessen Länge quer zur Toilettenschüssel (26) ausgerichtet ist.

11. Toilette nach einem der vorangehenden Ansprüche, **dadurch gekennzeichnet, dass** sie einen Boden (32) aufweist, der eine höhenverstellbare Fußstütze (50) umfasst.

12. Toilette nach dem vorangehenden Anspruch, **dadurch gekennzeichnet, dass** sie so konfiguriert ist, dass die Fußstütze (50) durch den Benutzer und/oder automatisch in Abhängigkeit von dem im Bereich der Knie (48) des auf der Toilettenschüssel (26) sitzenden Benutzers gebildeten Winkel (A1) höhenverstellbar ist.

13. Toilette nach einem der vorangehenden Ansprüche, **dadurch gekennzeichnet, dass** sie mit einem Antriebssystem ausgestattet ist, das es ermöglicht, das Waschbecken (58) in jede der verschiedenen Positionen zu bewegen.

14. Luftfahrzeugnase (6), umfassend zumindest eine Toilette (10) nach einem der vorangehenden Ansprüche, wobei die Toilette eine Rückwand (24) umfasst, deren Form vorzugsweise dem Profil des doppelt gekrümmten Rumpfabschnitts (3a), der von dieser Toilettenrückwand abgedeckt wird, folgt.

15. Luftfahrzeug (100), umfassend eine Nase (6) nach dem vorangehenden Anspruch und/oder zumindest eine Toilette (10) nach einem der Ansprüche 1 bis 13.

## Claims

1. Aircraft toilet (10) comprising a toilet bowl (26) and a washbasin (58), **characterized in that** the washbasin (58) is movably mounted in the toilet so as to be able to adopt at least two distinct positions relative to the toilet bowl (26), including:
- a retracted position adopted to bring the toilet (10) into a configuration of use of the bowl (26);
- a deployed position adopted to bring the toilet (10) into a washbasin configuration, a position in which the washbasin (58) is arranged above the bowl (26),
and **in that** the toilet is designed so that the washbasin (58) pivots downwards to go from its deployed position to its retracted position.

2. Toilet according to Claim 1, **characterized in that** the washbasin (58) forms an integral part of a washbasin module (56) also equipped with a washbasin table (60), the washbasin module (56) being mounted to be mobile so as to be able to adopt said at least two distinct positions relative to the toilet bowl (26), also by tilting downwards to go from the deployed position to the retracted position.

3. Toilet according to Claim 2, **characterized in that** it comprises a roller blind (66) featuring a fixed cassette (68) arranged to the rear of the toilet bowl (26) and a blind edge fastened to a front part (69) of the washbasin table (60).

4. Toilet according to Claim 2 or Claim 3, **characterized in that** the washbasin module (56) is equipped with a washbasin cover (72) mounted to be mobile relative to the washbasin table (60) so as to be able to adopt two distinct positions, including:
- a position covering the washbasin (58) enabling formation, conjointly with the washbasin table (60), a baby changing table;
- a retracted position giving access to the washbasin (58).

5. Toilet according to any one of Claims 2 to 4, **characterized in that** the washbasin module (56) is also equipped with a tap (76), preferably mounted to be mobile so as to be able to adopt two distinct positions relative to the washbasin (58), including:
- a retracted position rendering the tap (76) inaccessible;
- a position for use of the tap (76).

6. Toilet according to any one of Claims 2 to 5, **characterized in that** the washbasin module (56) is mounted to be mobile on a shelf (62) that forms an extension of the washbasin table (60) when the module (56) adopts its deployed position.

7. Toilet according to the preceding claim, **characterized in that** the shelf (62) is mounted on a rear wall (26) of the toilet in a fixed manner or vertically mobile.

8. Toilet according to any one of Claims 2 to 7, **characterized in that** the washbasin module (56) is mounted to be mobile in rotation, preferably about a rotation axis (64) parallel to a transverse direction of the toilet bowl (26).

9. Toilet according to any one of Claims 2 to 8, **characterized in that** in the retracted position of the washbasin module (56) the washbasin table (60) is situated behind the toilet bowl (26), preferably arranged vertically.

10. Toilet according to any one of the preceding claims, **characterized in that** it comprises a lid (44) covering the toilet bowl (26), the lid (44) preferably having a rectangular general shape the length of which is oriented transversely relative to the toilet bowl (26).

11. Toilet according to any one of the preceding claims, **characterized in that** it includes a floor (32) comprising a height-adjustable footrest (50).

12. Toilet according to the preceding claim, **characterized in that** it is configured so that the footrest (50) is adjustable in height by the user and/or automatically as a function of the angle (A1) form at the level of the knees (48) of the user sitting on the toilet bowl (26).

13. Toilet according to any one of the preceding claims, **characterized in that** it is equipped with a drive system enabling the washbasin (58) to be moved into each of its distinct positions.

14. Aircraft nose section (6) comprising at least one toilet (10) according to any one of the preceding claims, the toilet comprising a rear wall (24) the shape of which preferably follows the profile of the double curvature fuselage portion (3a) covered by this toilet rear wall.

15. Aircraft (100) comprising a nose section (6) according to the preceding claim and/or at least one toilet (10) according to any one of Claims 1 to 13.
